**Europäisches Patentamt**

**European Patent Office**

**Office européen des brevets**

(11) Veröffentlichungsnummer: **0 113 062**
**B1**

(12) **EUROPÄISCHE PATENTSCHRIFT**

(45) Veröffentlichungstag der Patentschrift:
**15.10.86**

(21) Anmeldenummer: **83112102.5**

(22) Anmeldetag: **01.12.83**

(51) Int. Cl.⁴: **B 62 D 49/06,** B 62 D 21/18,
B 62 D 17/00

(54) **Arbeitsfahrzeug.**

(30) Priorität: **06.12.82 DE 3245085**

(43) Veröffentlichungstag der Anmeldung:
**11.07.84 Patentblatt 84/28**

(45) Bekanntmachung des Hinweises auf die Patenterteilung:
**15.10.86 Patentblatt 86/42**

(84) Benannte Vertragsstaaten:
**BE CH DE FR GB IT LI SE**

(56) Entgegenhaltungen:
**EP-A-0 047 942**
**EP-A-0 110 474**
**DE-U-8 031 892**
**FR-A-1 380 089**
**FR-A-2 201 666**
**FR-A-2 424 172**
**GB-A-1 300 010**
**GB-A-2 091 654**
**US-A-3 236 324**
**US-A-3 677 572**
**US-A-3 822 757**

(73) Patentinhaber: **Kramer- Werke GmbH, D-7770
Überlingen (DE)**

(72) Erfinder: **Friedrich, Karl, Gräfin- Hildegard- Strasse
17, D-7776 Sipplingen (DE)**

(74) Vertreter: **Grättinger, Günter, Patentanwalt
Almeidaweg 35 Postfach 16 49, D-8130 Starnberg
(DE)**

**Beschreibung**

Die Erfindung betrifft ein Arbeitsfahrzeug mit wenigstens zwei antreibbaren und lenkbaren Rädern, die über wenigstens teilweise im Felgenbereich vorgesehene, zum Lenken verschwenkbare Radstützen gegenüberliegend an einem Achskörper aufgehängt sind, wobei die Radstützen von den Radfelgen schräg nach innen zu den darüberliegenden Enden des Achskörpers verlaufen und mit dem Achskörper eine als Lenk- und Antriebsachse ausgebildete Portalachse bilden und wobei der Antrieb über ein auf einem Achsbolzen des jeweiligen Rads sitzendes Abtriebszahnrad erfolgt, auf welches ein Ritzel treibt, das in der zugeordenten Radstütze gelagert ist.

Bei einem derartigen bekannten Arbeitsfahrzeug (EP-A-47 942) ist zur Verbesserung der Bodenfreiheit eine Portalachse vorgesehen, deren den Querteil bildender Achskörper oberhalb der Räder angeordnet ist, die über entsprechend lange Radstützen am Achskörper aufgehängt sind. Die hohe Bodenfreiheit wird dabei durch eine nachteilige Verlagerung des Fahrzeugschwerpunktes nach oben erkauft. Da die Spreizung der Räder sich in einer üblichen Größenordnung bei etwa 5 Winkelgraden liegt, sind die Achsschenkelbolzen der Vorderräder in Fahrzeuglängsrichtung im Sinne eines übergroßen Nachlaufs geneigt, um einen größeren Radeinschlag des kurzen inneren Rades zu erzielen. Da die Antriebsverbindung im Radbereich nicht oder nur sehr gering untersetzt ist, ergibt sich eine große und aufwendige Bauweise der kraftübertragenden Bauteile außerhalb des Radbereichs.

Bei einem anderen bekannten Arbeitsfahrzeug (FR-A-2 424 172) ist die Empfindlichkeit gegenüber unebenem Boden dadurch vermindert, daß sich die Vorderachse in Bezug auf das Fahrgestell um eine horizontale, in der vertikalen Symmetrieebene des Fahrzeugs gelegenen Achse drehen kann. Achskörper, Antriebsverbindung und Lenkung verlaufen jeweils etwa horizontal aus dem Bereich der Radfelgen zur Fahrzeugmitte, so daß das Fahrzeug nur eine geringe Bodenfreiheit aufweist.

Demgegenüber liegt der Erfindung die Aufgabe zugrunde, durch eine geeignete Achskonstruktion ein kleines, kompaktes Arbeitsfahrzeug zu schaffen, das unterschiedlichen Anforderungen wie Unempfindlichkeit gegenüber Bodenunebenheiten, Stabilität und Bedienungskomfort gleichzeitig gerecht wird, insbesondere den Forderungen hoher Wendigkeit bei niedriger Bauhöhe, aber großer Bodenfreiheit.

Diese Aufgabe wird durch die im Anspruch 1 gekennzeichneten Merkmale gelöst. Die Achskonstruktion des erfindungsgemäßen Arbeitsfahrzeugs hat zur Folge, daß ein Lenkeinschlag von 180° oder etwas darüber ermöglicht wird, da sich bei Volleinschlag die Räder etwas schräg stellen und den Raum, in dem der Achskörper angeordnet ist, nicht beanspruchen. Durch diese relativ tiefe Anordnung des Achskörpers wird die Bodenfreiheit des Fahrzeugs aber nicht beeinträchtigt, da unter dem Achskörper keine störenden Getriebeteile den Freiraum zwischen den Rädern einengen. Das auf den Achskörpern abgestützte Fahrgestell befindet sich somit sehr dicht über den Rändern, so daß ein tiefer Schwerpunkt des Fahrzeugs erzielt wird. Infolge der hohen Antriebsuntersetzung im Radbereich ist die übrige Antriebsverbindung entsprechend klein dimensioniert, so daß auch die Achskörper schlank dimensioniert werden können.

Die Verlängerungen der Längsachse der Radstützen verlaufen zweckmäßigerweise durch die Bodenaufstandsflächen der betreffenden Räder. Dabei beträgt der Spreizungswinkel der jeweiligen Längsachsen der Radstützen zur Vertikalen etwa 10-16°. Der Radsturz liegt in der Grössenordnung von 2°.

Die Radstützen können jeweils schräg zu einer vertikalen, die Drehachse des zugeordneten Rads enthaltenden Ebene angeordnet sein. Diese Konstruktion ist insbesondere dann von Vorteil, wenn die Zwischenwelle an der Radachse vorbei in den unteren Bereich der Radschüssel geführt ist. Das Rad kann dabei in einem Gehäuseteil der Radstütze auf breiter Basis gelagert werden.

Durch die deutliche Schräglage der Räder wird ein gutes Lenkverhalten erzielt, welches einschließt, daß die Räder, bezogen auf ihre in der Geradeausfahrt eingenommene Mittenstellung, in beiden Schwenkrichtungen jeweils um etwa 90 Winkelgrade verschwenkbar sind. Die gewählte Schräglage der Räder bei extremen Lenkeinschlag ist dabei für die niedrigen Arbeitsgeschwindigkeiten ohne weiteres tolerierbar. Idealerweise beträgt der Lenkrollradius, also der Abstand zwischen dem Mittelpunkt der Bodenaufstandsfläche des Rads zum Schnittpunkt der Längsachse der Radstütze mit der Bodenfläche, Null. Aus konstruktiven Gründen, die sich durch die Möglichkeit der Achskonstruktion ergeben, kann jedoch auch ein kleiner Lenkrollradius vorgesehen werden.

Die Antriebsübertragung zum Rad erfolgt in besonders vorteilhafter Weise dadurch, daß das Abtriebszahnrad als Stirnrad ausgebildet ist, dessen antreibendes Ritzel über eine im wesentlichen horizontale Ritzelwelle und über zwei Kegelradgetriebe, zwischen denen eine in der Längsrichtung der Radstütze in dieser verlaufende Zwischenwelle eingeschaltet ist, mit einer im Achskörper gelagerten Achswelle verbunden ist.

Eine andere Möglichkeit der Antriebsübertragung ist die, daß das Abtriebszahnrad als Tellerrad ausgebildet ist und ein kegelradförmiges Ritzel über eine Zwischenwelle und ein Kegelradgetriebe mit einer im Achskörper gelagerten Achswelle verbunden ist. In der Praxis ergeben sich hier geringfügige größere Getriebeabmessungen im Radbereich.

Ein stark untersetzendes Endgetriebe innerhalb der Radfelge ist bei andersartig konstruierten Fahrzeugen an sich bekannt (DE-C-306 474). Doch ist die bekannte Konstruktion nicht ohne weiteres auf eine Konstruktion mit Portalachse übertragbar; auch wirken dabei die Antriebs- und Lenkkräfte in ungünstiger Weise zusammen. Das hat zur Folge, daß bei bestimmten Beschleunigungs- oder Bremsvorgängen das Arbeitsfahrzeug auf die Seite zu lenken versucht bzw. umgekehrt bei bestimmten Fahrzuständen für eine beabsichtigte Lenkung ein erhöhter Kraftaufwand erforderlich ist. Demgegenüber schafft die vorangehend als besonders vorteilhaft dargelegte Antriebsübertragung auf das Rad eine Kompensation zwischen Antriebskräften und Lenkkräften so daß die Lenkung nicht durch Antriebszustände gestört wird und die Lenkkraftverstärkung niedriger dimensioniert werden kann.

Zur Lenkverstellung, die insbesondere durch einen hydraulischen Linearmotor angetrieben sein kann, ist es zweckmäßig, daß die Achskörper an den Unterseiten von Traversen des Fahrzeugrahmens sitzen und daß an den Achskörpern jeweils ein Lenkhebel gelagert ist, der für den Angriff eines Lenkantriebs einen oberhalb des Achskörpers angeordneten Arm aufweist und der noch einen unterhalb des Achskörpers angeordenten Arm besitzt, der über eine Winkelübersetzung an der zugeordneten Radstütze angreift. Der Lenkhebel selbst braucht deshalb nicht zu einer Drehung um 180° angetrieben sein. Für die Übersetzung kommen in bekannter Weise eine Winkelübersetzung (Schwinge) oder eine Zahnradübersetzung (DE-A-23 49 177) in Frage. Durch diese Trennung des Lenkhebels in eine oberhalb und einen unterhalb des Achskörpers gelagerten Arm wird eine in vertikaler Richtung besonders platzsparende Bauweise erzielt.

Bezüglich weiterer Einzelheiten, Vorteile und Weiterbildungen wird auf die Unteransprüche und die nachfolgende Beschreibung bevorzugter Ausführungsbeispiele unter Bezugnahme auf die Zeichnung verwiesen. Es zeigen:

Fig. 1 in schematischer, perspektivischer Ansicht von schräg unten ein erfindungsgemäßes Arbeitsfahrzeug, nämlich einen Kleinlader;

Fig. 2 eine teilweise geschnittene Vorderansicht einer bevorzugten Ausführung der Achse des Arbeitsfahrzeugs nach Fig. 1;

Fig. 3 eine Seitenansicht der Achse nach Fig. 2 unter Darstellung des Rads in seinen beiden extremen Lenksstellungen;

Fig. 4 einen Vertikalschnitt durch ein Rad mit Radstütze einer abgewandelten Konstruktion;

Fig. 5 eine Seitenansicht der Achse mit Radstütze nach Fig. 4 mit dem Rad in Schnittdarstellung in den beiden extremen Lenksstellungen;

Fig. 6 einen Schnitt entsprechend Fig. 4 durch eine etwas abgewandelte Ausführungsform;

Fig. 7 einen Schnitt entsprechend Fig. 4 durch eine weiter abgewandelte Ausführungsform;

Fig. 8 eine Vorderansicht eines Kegeltadgetriebes in der Ausführung nach Fig. 7;

Fig. 9 und 10 Schnittansichten entsprechend Fig. 4 von weiterhin abgewandelten Ausführungsformen;

Fig. 11 eine schematische perspektivische Darstellung des Fahrzeugrahmens.

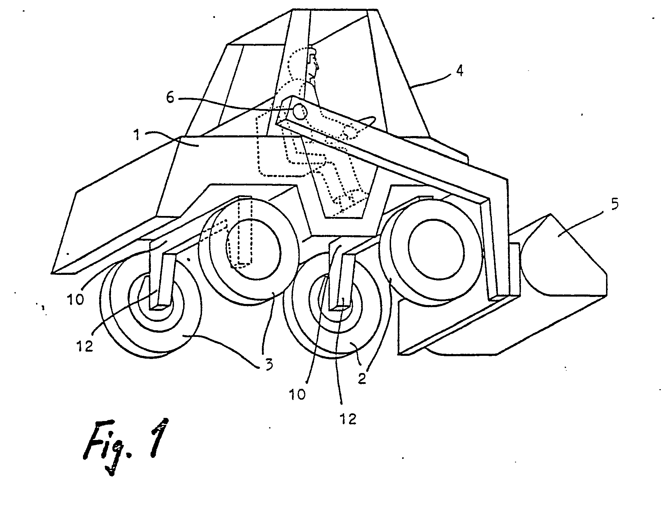

Fig. 1 zeigt ein erfindungsgemäßes fahrbares Arbeitsfahrzeug in Form eines Klein-Schaufelladers, mit einem Fahrzeugrahmen 1 in Form eines Portalrahmens, Vorderrädern 2, Hinterrädern 3, einem Fahrerhaus 4 und einem an einem Ausleger sitzenden Werkzeug in Form einer Ladeschaufel 5. Ein in der Zeichnung nicht sichtbarer Motor mit querliegender Kurbelwelle befindet sich seitlich neben dem Fahrersitz. Das Arbeitsfahrzeug ist sehr kompakt und als Fahrzeug überaus wendig. Als mittlere Größenordnung einer Seite des beschriebenen Ausführungsbeispiels seien beispielhaft angegeben: Eine Gesamthöhe von 2000 bis 2300 mm, Gesamtlänge ohne Werkzeug 2300 bis 2800 mm, Raddurchmesser mit Reifen 800 bis 900 mm, Spurweite 1000 bis 1200 mm. Die Schaufel 5 ist an einem hinter dem Fahrerhaus befindlichen Anlenkpunkt 6 an einer Seite des Fahrzeugs angelenkt, der Ausleger versperrt also nicht einen seitlichen Ein- und Ausstieg des Fahrers in das Fahrerhaus 4 auf der anderen Seite. Die Räder 2 und 3 sind in größtmöglichem Abstand voneinander an den extremen Rahmenenden angeordnet, so daß das Fahrzeug ein stabiles Fahrverhalten und eine hohe Kippfestigkeit zeigt. Dabei hat das Fahrzeug eine erhebliche Bodenfreiheit, die seinen Einsatz im Gelände begünstigt.

Die hohe Wendigkeit des Fahrzeugs resultiert aus der Art der Radaufhängung. Das Arbeitsfahrzeug weist vier lenkbare Antriebsräder auf, die durch Portalachskonstruktionen aufgehängt sind und jeweils innerhalb eines Lenkeinschlagbereichs von etwas mehr als 180° verschwenkbar sind, wobei die Stellung für die Geradeausfahrt die Mittelstellung ist, aus der heraus der Einschlag um ca. ± 90° möglich ist. Die Radialebenen der Räder liegen in den Stellungen des extremen Lenkeinschlags bei denen das Fahrzeug in Querrichtung fährt oder einen engen Wendekreis ausführt, etwa parallel zur Achsrichtung des Achskörpers.

Die Antriebe der einzelnen Räder können von einem zentralen Getriebe, von Getrieben, die jeweils zweien der Räder zugeordnet sind, oder auch einzeln abgeleitet sein. Die Antriebe erfolgen jeweils über eine im Portal vorhandene Welle, was zu einer wesentlich billigeren und raumsparenderen Konstruktion führt als beispielsweise die Verwendung von hydraulischen Radnabenmotoren.

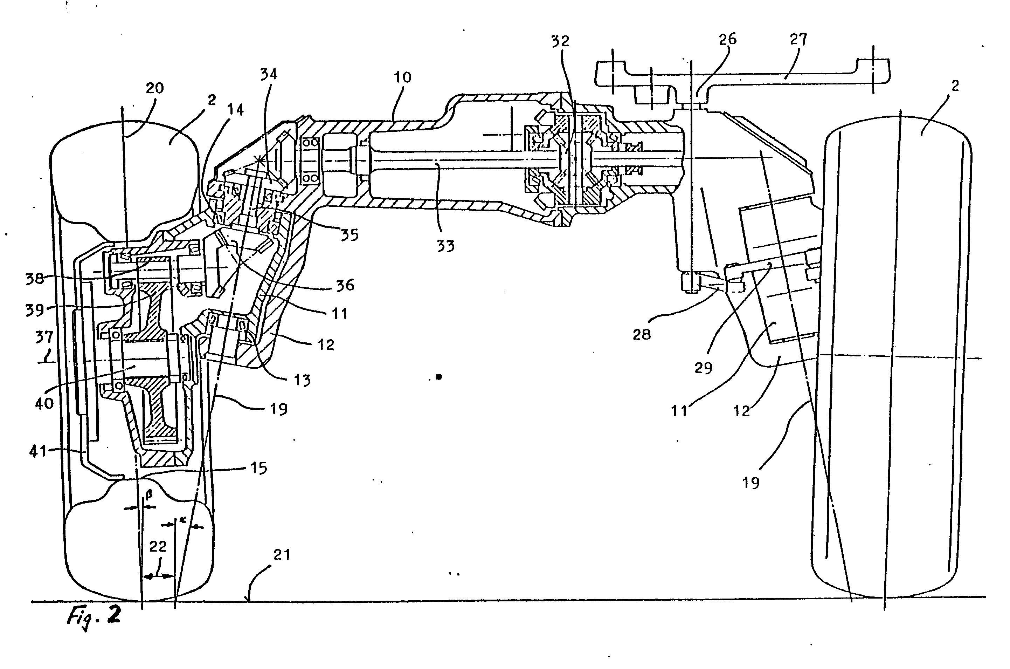

Fig. 2 zeigt am Beispiel einer in teilweise geschnittener Vorderansicht dargestellten Vorderachse die Achsportalkonstruktion. Die Hinterachse ist übereinstimmend aufgebaut. Die Achse besteht aus einem Achskörper 10 und darin verdrehbar gelagerten, schräg nach unten verlaufenden Radstützen 11, die selbst jeweils am eigentlichen Achskörper und an einem vom Achskörper nach unten abstehenden Stützbügel 12 mit Hilfe eines unteren Wälzlagers 13, das ein Axial-Radial-Lager ist, und eines oberen Wälzlagers 14 gelagert sind und innerhalb der durch die Radfelge 15 gebildeten Schüssel das Rad 2 lagern. Die Radstützen 11 weisen jeweils eine Längsachse 19 auf, die zugleich deren Verdrehungsachse ist und in der dargestellten Weise schräg verläuft. Die Längsachse 19 liegt beim beschriebenen Beispiel in der vertikalen Axialebene der Räder und weist gegen die Horizontale eine Neigung von 79°, also gegen das Lot einen Spreizungswinkel α von 11° auf. Die radiale Mittelebene 20 des Rads 2 weist einen Sturz β von 2° auf. Die Achse 19 und die Mittelebene 20 durchdringen den Untergrund 21 in der Reifenaufstandsfläche, jedoch dort nicht in einem Punkt. Vielmehr wird dort aus konstruktiven Gründen ein Lenkrollradius 22 in Kauf genommen. Die Konstruktion ist jedoch so gewählt, daß dieser Lenkradius nicht groß ist, dies würde auch eine Verschlechterung der Bodenfreiheit bedeuten.

Der Lenkverschwenkung der Räder 2 dient ein Lenkhebel 26, der Hebelarme 27 oberhalb des Achskörpers 10 und einen Hebelarm 28 unterhalb des Achskörpers 10 aufweist. Die Hebelarme 27 und 28 sind drehfest miteinander verbunden. An den Hebelarmen 27 greifen ein Lenkantrieb, insbesondere ein Hydraulikzylinder, und eine mit dem entsptechenden Hebelarm des andeten Rades dieser Achse verbundene (in der Zeichnung nicht sichtbare) Spurstange an, der Hebelarm 28 greift andererseits über eine als Schwinge ausgebildete Winkelübersetzung 29 an der Radstütze 11 an, um diese zu verdrehen. Anstelle einer derartigen Winkelübersetzung 29 ist auch eine Drehübersetzung mit Zahnrädern möglich, wobei am Lenkhebel, der am Achskörper gelagert ist, ein dessen Drehwinkel entsprechender Zahnradsektor sitzt, der mit einem auf der Radstütze sitzenden kleineten Zahnrad kämmt.

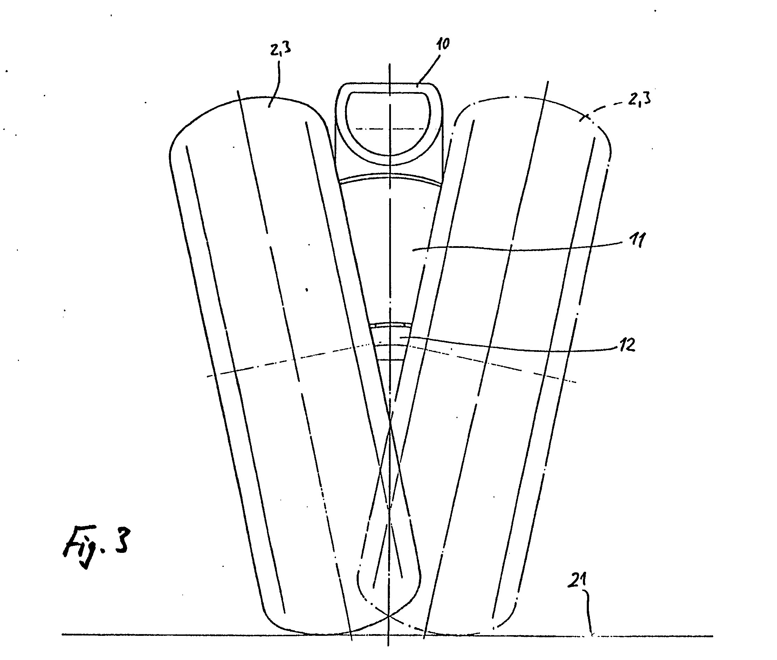

Mit Hilfe einer Verdrehung des Lenkhebels 26 um beispielsweise 90° kann eine Verdrehung der Radstütze 11 um 180° erzielt werden. Hierdurch wird das Rad vollkommen quergestellt, außerdem nimmt es eine Neigung gegen den Untergrund 21 in der Größenordnung von 77° beziehungsweise einen Sturz von 13° an, der aus dem Spreizungswinkel und dem Sturz bei Geradeausfahrt resultiert. Diese Schrägstellung hat für die Statik und für das Fahrverhalten bei Manövriergeschwindigkeiten keinen nachteiligen Einfluß, sie ist jedoch erforderlich, um zwischen den vom Rad 2 in den extremen Lenkstellungen beanspruchten Räumen einen Zwickel zu schaffen, in dem der Achskörper 10 Platz hat, wie in Fig. 3 dargestellt ist.

Fig. 3 zeigt sehr deutlich, welch geringer Einbauraum bei Volleinschlag der Räder für die Gestaltung des Achskörpers und insbesondere der Achsgabel verbleibt. Die Verschwenkung um ± 90° ist möglich, da die Radstütze schräg abwärts verläuft und in den Innenraum der Felge hineingebaut worden ist.

Der Antrieb wird über ein Differentialgetriebe 32, eine Achswelle 33, ein erstes Kegelradgetriebe 34, eine Zwischenwelle 35, deren Drehachse mit der Längsachse der betreffenden Radstütze 11 zusammenfällt, und ein zweites Kegelradgetriebe 36 auf eine zur Drehachse 37 des Rads 2 parallele Ritzelwelle mit Ritzel 38 übertragen, von wo aus er über ein Stirnrad 39 von hoher drehzahlerniedrigender Übersetzung von 1:7 bis 1:8 auf den Achsbolzen 40 und die Radnabe 41 übertragen wird. Im Bereich des Achskörpers und der Radstützen läuft der Antrieb also mit verhältnismäßig hoher Drehzahl und niedrigen Kräften.

Fig. 2 veranschaulicht die Bodenfreiheit des Arbeitsfahrzeuges. Zwar ergibt der Stützbügel 12 noch eine gewisse Aufsitzfläche im Bereich der Drehachse der Räder 2, jedoch ist ersichtlich der gesamte Mechanismus, der sich aufgrund des Endübersetzungsgetriebes unterhalb der Drehachse 37 befindet, in die Schüssel der Felge 15 hineingenommen und hierdurch gegenüber Bodenunebenheiten durch das Rad gedeckt. Der Stützbügel 12 seinerseits ist von äußerst fester und robuster Konstruktion und durch Bodenunebenheiten kaum zu beschädigen. Dieser Stützbügel 12 stellt ein Schutzschild für die Radstütze 11 dar und übt durch die Schräge seines Verlaufs zum Achskörper 10 hinauf eine Ablenkwirkung auf eventuelle Hindernisse aus. Der untere Hebelarm 28 und die Winkelüberserzung sind bereits in einer Höhe angeordnet, die über dem Niveau üblicher Unebenheiten des Untergrunds liegt. Ist ein spezielles, besonders hohes Hindernis zu überfahren, so lenkt der Fahrer sein Fahrzeug so, daß das Hindernis durch die Fahrzeugmitte überrollt wird.

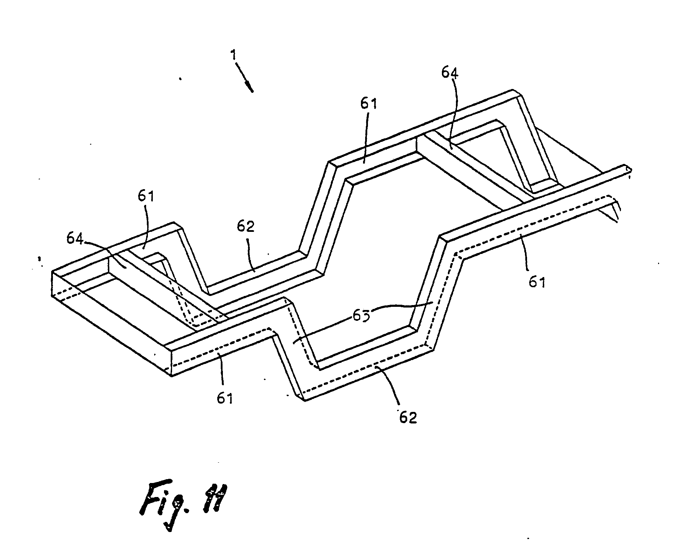

Bei Volleinschlag der Räder nähern sich diese im Bereich der Längsmittelebene des Fahrzeugs stark aneinander an. Der Raum unterhalb des Achsportals ist deshalb einerseits zur Erzielung einer hohen Bodenfreiheit, andererseits als Schwenkraum für die Räder frei. Insoweit stellt der Fahrzeugrahmen 1 also die untere Begrenzung der Aufbauten dar, und die Achskörper 10 sitzen an den Unterseiten der später beschriebenen Rahmen-Traversen 64 (Fig. 11).

Die beschriebene Übertragung der Arbeitsleistung von der im Achskörper 10 gelagerten Achswelle 33 auf die Radnabe 41 hat durch ihre Auslegung, insbesondere durch die Kinematik und die Wahl der Drehzahlübersetzungen, die Folge, daß die vom Achskörper in die Achsstütze eingeleiteten Antriebs-Drehkräfte und die über die Winkelübersetzung 29 auf die Radstutze 11 aufgebrachten Lenkkräfte etwa gleiche Größenordnung aufweisen und sich gegenseitig subtrahieren, so daß weder durch Beschleunigungs- oder Bremsvorgänge eine erhebliche Rückwirkung auf die Lenkung auftritt, noch bei bestimmten Bettiebszuständen so hohe Lenkkräfte zur Überwindung der entgegengerichteten Antriebskräfte erforderlich würden, daß die Lenkinstallation weit überdimensioniert werden müßte. Beispielsweise bei einer Konstruktion, bei der die Zwischenwelle 35 bis zum unteren Bereich des auf der Ritzelwelle des Ritzels 38 sitzenden Kegelzahnrads heruntergezogen wäre, damit das auf der Zwischenwelle 35 sitzende Kegelzahnrad dort mit jenem Kegelzahnrad kämmt, würden sich die Antriebskräfte und die Lenkkräfte addieren und damit erheblich gegenseitig beeinflussen.

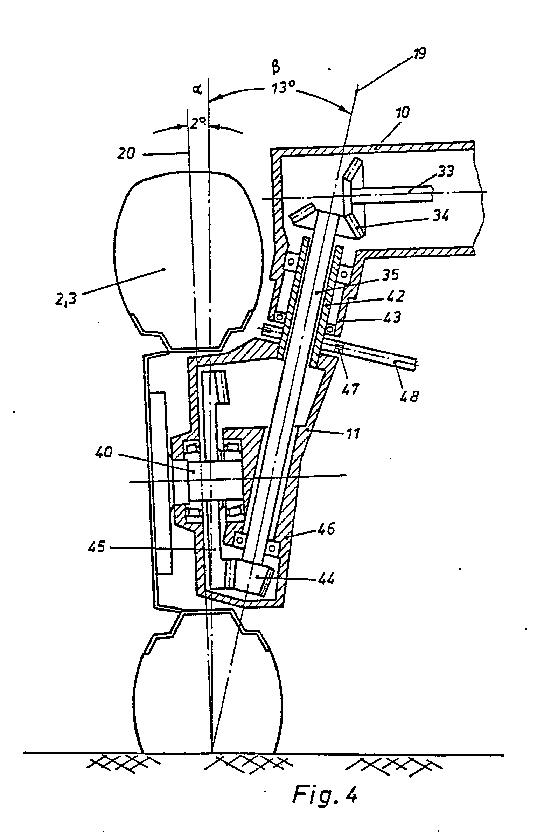

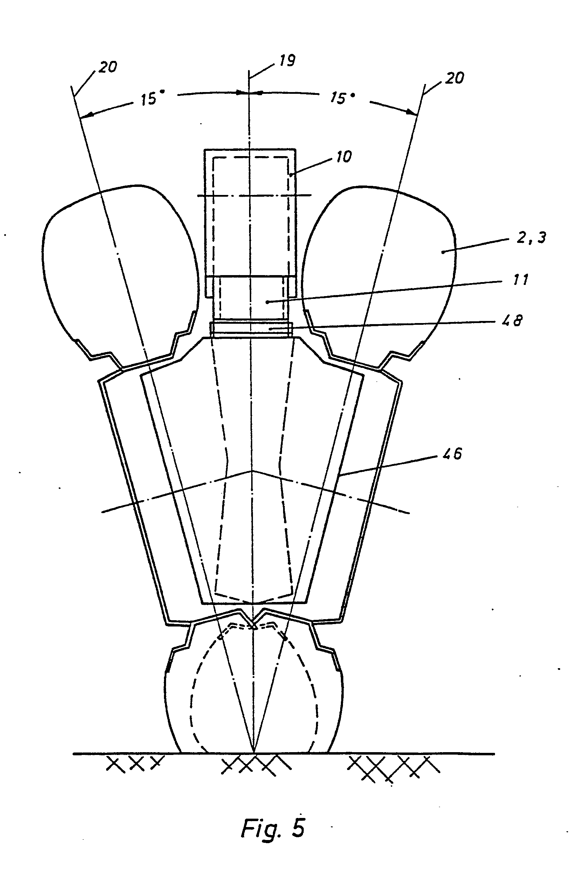

Auch die Konstruktion nach den Fig. 4 und 5 ermöglicht die Wendigkeit und hohe Bodenfreiheit. Das Rad 2 bzw. 3 ist an der Radstütze 11, die als Portalstütze bezeichnet werden kann, aufgehängt, die im wesentlichen aus drei zueinander koaxialen Teilen besteht, nämlich der Zwischenwelle 35, einer als zur Zwischenwelle 35 koaxiale Hohlwelle ausgebildeten Lenkwelle 42, die unabhängig von der Zwischenwelle 35 drehbar ist, und einer fest am Rahmen sitzenden Trägerkonstruktion 43. Die Trägerkonstruktion 43 ist im vorliegenden Fall gehäuseartig um die beiden Wellen herum ausgeführt und verlängert sich oben im in Fahrzeugquerrichtung verlaufenden horizontalen Achskörper 10, in dem die vom Differentialgetriebe 32 hergeleitete Achswelle 33 untergebracht ist, die über das Kegelradgetriebe 34 die Zwischenwelle 35 antreibt.

Für den Antrieb gibt es verschiedene Möglichkeiten. Es kann z.B. von dem jeweils oberen Kegelradpaar eines Radantriebs die Achswelle 33 zum Differentialgetriebe 32 führen. Es ist aber auch möglich, das Antriebssystem hydrostatisch auszuführen. Dabei können z.B. für die beiden vorderen und hinteren Räder je ein Motor und eine Pumpe verwendet werden. Es ist dann z.B. leicht möglich, bei Volleinschlag aller Räder die Räder einer Achse in der Drehrichtung umzukehren.

Die übereinstimmende Rotationsachse der Zwischenwelle 35 und der Lenkwelle 42, also die Längsachse 19 der Radstütze 11, ist bei dieser Ausführungsform gegen die Senkrechte um einen Spreizungswinkel von 13° geneigt und liegt bei der beschriebenen Ausführung in einer Ebene, die normal zur Radebene und zum Untergrund liegt, also die Rotationsachse des Rades enthält. Die Längsachsen 19 der Radstützen 11 der beiden Vorderräder 2 liegen also in einer ersten Ebene und die Längsachsen der Radstützen 11 der beiden Hinterräder 3 liegen in einer hierzu parallelen zweiten Ebene.

Das Rad 2 oder 3 selbst hat zur Senkrechten einen Sturzwinkel α von 2° und einen Spreizungswrinkel β von 13°, so daß zwischen der Längsachse der Radstütze 11 und der Radebene ein Neigungswinkel von 15° liegt.

Unter Ausnützung dieses Winkels ist das Endübersetzungsgetriebe, das den Antrieb auf das Rad überträgt, innerhalb von dessen Felgenraum untergebracht. Dieses Endübersetzungsgetriebe besteht aus einem auf der Zwischenwelle 35 sitzenden kegelradförmigen Ritzel 44 und einem hiermit kammenden Tellerrad 45, das auf der Radache 40 verkeilt ist. Die Anordnung des Getriebes im unteren Teil eines einen Teil der Radstütze 11 darstellenden Radachsengehäuses 46 läßt die Schmierung problemlos zu, jedoch ist der Kräfteverlauf und Raumbedarf weniger günstig als beim Stirntrieb nach Fig. 2.

Das Endübersetzungsgetriebe soll einen möglichst hohen Anteil des erforderlichen Übersetzungsverhältnisses soweit wie möglich zum Rad hin verlegen, um die kraftübertragenden Teile klein und leicht zu halten. Das Endübersetzungsgetriebe soll aber andererseits nicht allzuweit aus der Radkontur herausragen, um die Bodenfreiheit nicht zu beeinträchtigen. Die Konstruktionsmaße, einschließlich des Winkels der Stütze, hängen also weitgehend vom im Felgenraum zur Verfügung stehenden Raum und somit von der Radgröße und Reifenbreite ab.

Mit der als Hohlwelle ausgebildeten Lenkwelle 42 ist, praktisch als seine Fortsetzung, das Radachsengehäuse 46 werschweißt, in dem die Radachse 40 gelagert ist und das gemeinsam mit dem Rad um die Längsachse der Radstütze 11 schwenkt, wenn die Lenkwelle 42 verdreht wird. Die Verdrehung der Lenkwelle 42 erfolgt beim beschriebenen Beispiel über einen Kettentrieb aus einem Kettenrad 47 und einet Kette 48.

Fig. 5 zeigt, in Richtung der Neigungsebene der Stütze 11 gesehen, die beiden extremen Lenkstellungen des Rads 2, 3, wobei das Rad zur Veranschaulichung der Teileanordnung in der Felgenschüssel geschnitten dargestellt ist. Tatsächlich kann das Rad 2, 3 natürlich zu einer Zeit nur eine der beiden dargestellten Stellungen einnehmen. Der Winkel zwischen der Stütze 11 und der Radebene wirkt sich in diesen Extremstellungen so aus, daß das Rad eine Neigung von 15° zur Vertikalen hat. Diese Neigung ist noch nicht störend.

Wie Fig. 5 zeigt, verläuft zwischen den beiden Extremstellungen des Rads der Achskörper 10 und die Kette 48. Es ist also nicht erforderlich, daß der Achskörper oberhalb des oberen Radendes liegt. Da die Höhe im Bereich des oberen Radendes aus Gesichtspunkten der Bodenfreiheit ausreicht, ist zur stabilen Konstruktion der Achskörper 10 in dieser Lage sehr zweckmäßig.

In den Fig. 4 und 5 sind die Längsachse 19 der Radstütze 11 sowie der durch die Bodenaufstandsfläche des Rads verlaufende Rad-Durchmesser oder die radiale Mittelebene 20 eingezeichnet. Ersichtlich treffen sich diese Linien im Bereich der Bodenaufstandsfläche in einem Punkt, was zur Folge hat, daß der Lenkrollradius Null ist. Bei einer Lenkverstellung des Rads dreht sich dieses also um seinen Aufsitz, ohne gleichzeitig einen Weg zurückzulegen. Hierdurch ergibt sich ein besonders günstiges Lenkverhalten.

Wie insbesondere aus Fig. 4 ersichtlich ist, ist die Bodenfreiheit durch die Konstruktion der Endübersetzung nicht beeinträchtigt. Die schräg aufwärts verlaufende Radstütze, deren unteres Ende das Radachsengehäuse 46 ist, führt nicht zum Aufsitzen auf Bodenhindernisse und das Portal kommt in seiner ganzen Auswirkung zum Tragen.

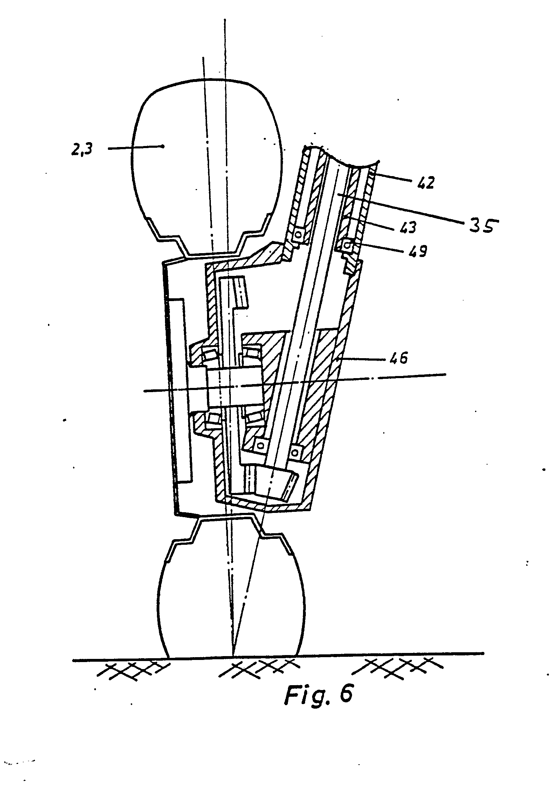

Bei der Ausführung nach Fig. 6 ist im Vergleich zu derjenigen nach Fig. 4 die Anordnung der Lenkwelle 42 und der Trägerkonstruktion 43 gegeneinander vertauscht. Die Lenkwelle stellt hierbei die äußere Hohlwelle dar, während die Trägerkonstruktion ein Rohr ist, innerhalb dessen die Antriebszwischenwelle 35 läuft und das von der hohlen Lenkwelle 42 umgeben ist. Diese Ausführung bietet den doppelten Vorteil, daß der Lenkangriff verhältnismäßig weit oben ansetzen kann, da die Lenkwelle auch in ihrem obersten Teil noch von außen her zugänglich ist, und daß sich über Lager 49 die Trägerkonstruktion 43 unmittelbar in ihrer Axialrichtung am Radachsengehäuse 46 abstützen kann, so daß die Antriebszwischenwelle 35 und die Lenkwelle 42 nicht in Axialrichtung mit dem Fahrzeuggewicht belastet sind. Diese Konstruktion der Radstütze 11 ist auch in Kombination mit dem Stirnradgetriebe 39 nach Fig. 2 anwendbar.

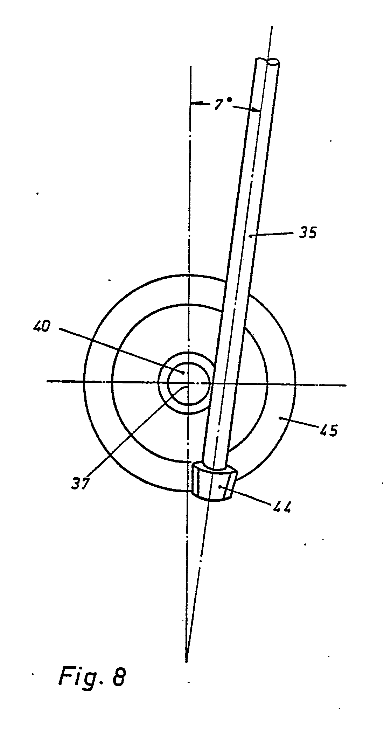

Als Lenkbetätigung selbst dient bei der Ausführung nach Fig. 8 ein (ein nicht gezeigter) Lenkhebel, an dem ein Lenkantriebsmittel, beispielsweise über ein Lenkgestänge ein hydraulischer Linearmotor, angreift.

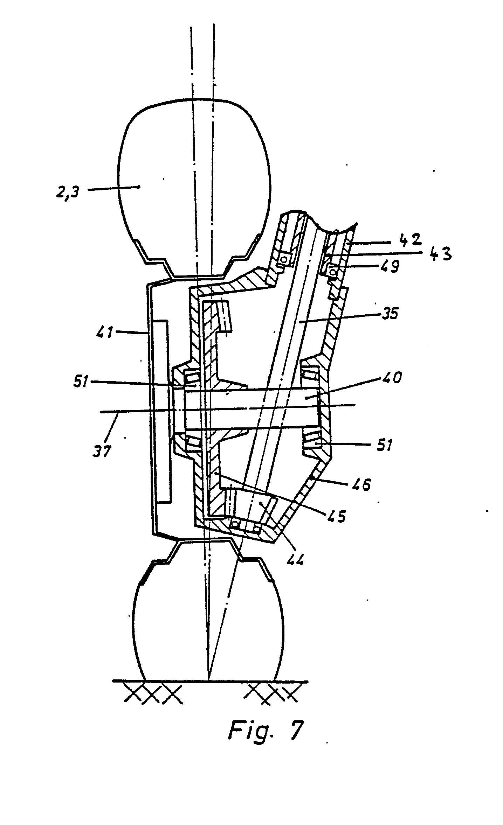

Die Fig. 7 und 8 zeigen ebenfalls eine Konstruktion mit hohler Lenkwelle. Die Konstruktion unterscheidet sich von derjenigen nach Fig. 5 insbesondere dadurch, daß die Längsachse der Radstütze nicht in der senkrechten Durchmesserebene des Rades liegt, sondern gegen diese Ebene um einen kleinen Winkel, der beim beschriebenen Beispiel 7° beträgt, geneigt ist. Die Zwischenwelle 35 schneidet deshalb nicht die Verlängerung der Drehachse des Rades, sondern läuft an dieser vorbei. Diese Ausführung bietet den Vorteil, daß bei im unteren Teil des Radachsengehäuses 46 kämmenden Rädern 44, 45 doch eine sehr breite Lagerbasis für die Radachse 40 gewählt werden kann, da er die gesamte Breite des Radachsengehäuses 46 ausnützen kann und in seiner Länge nicht durch die Zwischenwelle 35 begrenzt ist. Er ist durch relativ weit auseinanderliegende Radlager 51 im Bereich der beiden Seitenwände des Radachsengehäuses 46 in diesem gelagert.

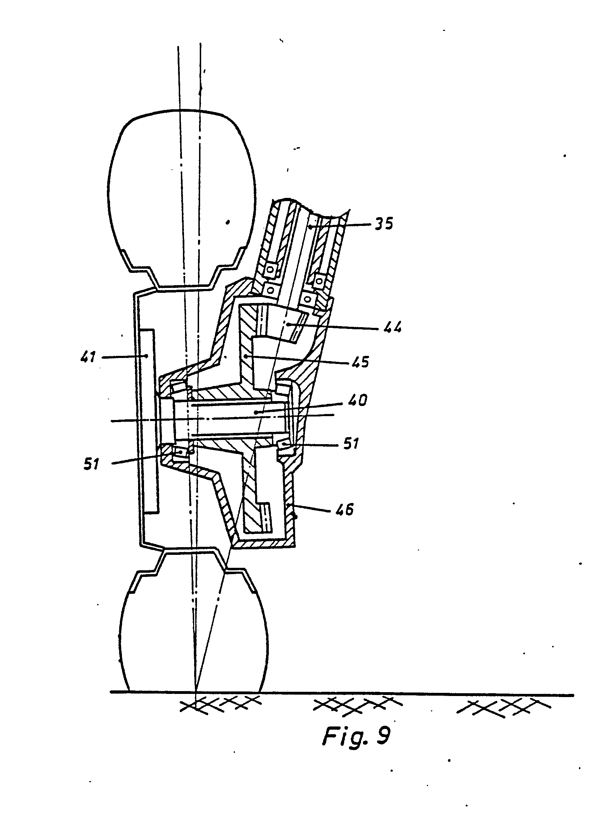

Fig. 9 zeigt eine Ausführung, bei der ebenfalls eine sehr breite Lagerbasis vorgesehen ist, indem nämlich - ähnlich wie in Fig. 2 - die Zwischenwelle 35 nur bis in den oberen Teil des Radachsengehäuses 46 reicht, wo sich bereits das Ritzel 44 befindet, das an dieser Stelle mit dem Tellerrad 45 kämmt. Hierdurch ergibt sich also keinerlei Beschränkung für die in den Radlagern 51 gelagerte Radachse 40 durch die Zwischenwelle 35. Die Konsttuktion ergibt dafür andererseits ein weiter aus dem Felgenbeteich in den Raum unter dem Fahrzeug vorstehendes Radachsengehäuse und/oder einen höheren Spreizwinkel der Stütze gegen die Senkrechte, damit die Kraftübertragungsstelle einigermaßen in den Felgenbereich hineingebracht werden kann, und ist etwas problematischer hinsichtlich der Schmierung. Aus der Figur ist ersichtlich, daß das Tellerrad 45 im Gegensatz zu demjenigen nach den Fig. 4, 6 und 7, auf einer langen Nabe sitzend, wesentlich weiter aus dem Felgenbereich herausgezogen ist, so daß das Radachsengehäuse 46 im unteren Bereich keine Abschrägung aufweisen kann. Die Konstruktion eignet sich also insbesondere für schwerere Fahrzeuge, für die die breite Lagerbasis wichtig ist, wobei jedoch hinsichtlich der Beschränkung der Bodenfreiheit durch das Radachsengehäuse kleine Zugeständnisse gemacht werden können.

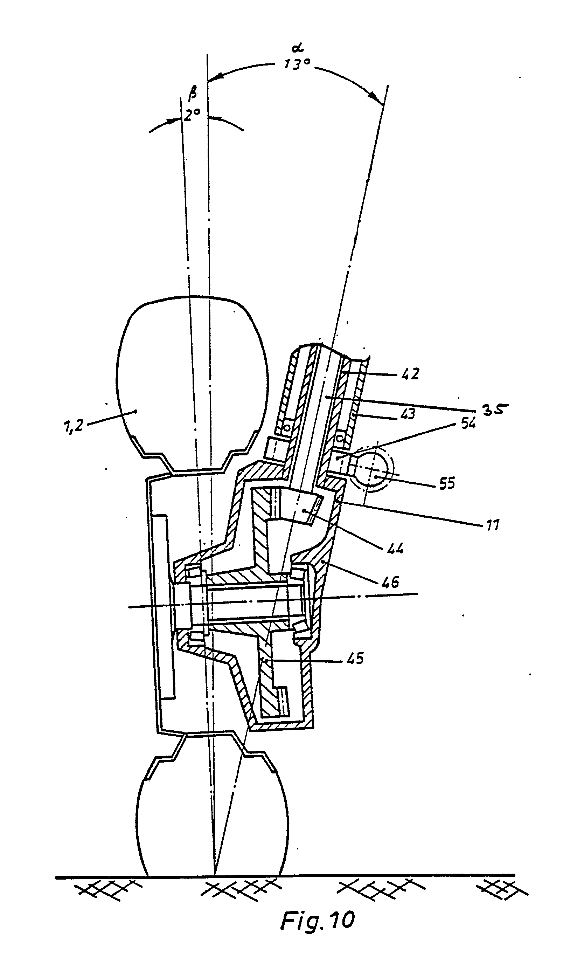

Fig. 10 zeigt eine abgewandelte Möglichkeit der Lenkbetätigung. Auf der mit dem Radachsengehäuse 46 starr verbundenen Lenkwelle 42, die hierbei wiederum als unmittelbar die Zwischenwelle 35 umgebende Hohlwelle ausgeführt ist, sitzt ein Zahnrad 54, an dem eine Zahnstange 55 angreift, die die Kolbenstange eines hydraulischen Linearmotors, also einer Kolben-Zylinder-Einheit, ist oder mit einer solchen Kolbenstange verbunden ist. Beispielsweise können je zwei Zahnstangen 55, beispielsweise für die Vorderräder 2 bzw. für die Hinterräder 3, von einem gemeinsamen Linearmotor angetrieben sein.

Durch die Wahl der Ansteuerung der hydraulischen Linearmotoren läßt sich ein interessantes Betriebsverhalten bestimmen. Es wird davon ausgegangen, daß die beiderseitigen Kolbenanschläge im Linearmotor den um 180° gegeneinander versetzten Extremeinschlägen der Räder entspricht. Die Zylinder der Linearmototen sind so ausgeführt, daß sie hydraulisch ausgeglichen sind. Es wird dabei das Verdrängungsvolumen des Zylinders des ersten Linearmotors in den Zylinder des zweiten Linearmotors ausgestoßen und so fort, so daß sich ein Gleichlauf aller Linearmotoren ergibt. In den Kolbenendstellungen besitzen die Zylinder der Linearmotoren Synchronisierstellungen, also einen Überlauf, durch den eventuelle Ungleichmäßigkeiten, die sich durch unterschiedliche Leckagen der einzelnen Zylinderdichtungen ergeben könnten, ausgeglichen werden. Außerdem sind die Linearmotoren so konzipiert, daß diejenigen der Vorderräder 2 oder diejenigen der Hinterräder 3 aus der einen Extremstellung in die andere Extremstellung umgeschaltet werden können.

Diese Umsteuerung von einer Endstellung zur anderen dient der Schaffung der Voraussetzungen für den seitlichen Versatz des Fahrzeugs bei Endstellungen nach einem Kreisfahrt-Lenkprogramm, sofern nicht für zwei der Räder ein Umkehrgetriebe für die Antriebsrichtung vorhanden ist.

Ein solches Umkehrgetriebe, und zwar für die beiden Vorderräder 2 einerseits und die beiden Hinterräder 3 andererseits getrennt und unabhängig oder nur für die Vorderräder 2 oder die Hinterräder 3 ist konstruktiv nicht allzu aufwendig und dient der Schonung der Reifen und des Untergrunds, so daß es in mancher Hinsicht bevorzugenswert ist.

Eine programmierte Lenkung, bei der zur Vermeidung des Radierens die Radebenen stets tangential zum Kurvenradius stehen, ist in nicht speziell dargestellter Weise beispielsweise dadurch möglich, daß dem Lenkrad ein Getriebe nachgeschaltet ist, das beispielsweise mittels einer Übersetzung und einer oder mehrerer Nockenscheiben oder mit Hilfe eines Getriebes mit variabler Übersetzung, etwa mit elliptischen Zahnrädern, oder auch durch entsprechend dimensionierte Hebelgestänge zwei hydraulische Kolben-Zylinder-Einheiten, also Linearpumpen, antreibt, von denen wiederum die eine den Linearmotor bzw. die Linearmotoren der Räder der linken Seite und die andere den Linearmotor bzw. die Linearmotoren der Räder der rechten Seite speist. Die Linearmotoren der Räder der linken und die der Räder der rechten Seite sind jeweils ausgeglichen, also in Reihe geschaltet, wobei eine Synchronisierung in der Endstellung oder in der Mittenstellung möglich ist. Das Nockenprofil ist so gestaltet, daß die den Linearmotoren der beiden Seiten eingespeisten Volumina unterschiedlich sind und zwar so, daß die geforderte Abstimmung der beiderseitigen Lenkeinschläge gewährleistet ist.

Fig. 11 zeigt in perspektivischer Darstellung den Rahmen 1, der als Portalrahmen ausgeführt ist. Er weist über den Rädern hochliegende Teile 61 und im Bereich zwischen den Rädern tiefliegende Teile 62 auf, zwischen denen ansteigende beziehungsweise abfallende Rahmenteile 63 verlaufen. Zwischen den hochliegenden Rahmenteilen 61 verlaufen Traversen 64. Der Raum unter den hochliegenden Teilen 61 steht voll den Rädern und ihrem Schwenkbereich zur Verfügung. Dies erweist sich als erforderlich, da die Räder in ihren extremen Lenkstellungen einander in Richtung der Breite stark annähern, gegebenenfalls sogar überlappen, also, in Längsrichtung des Fahrzeugs gesehen, wenig oder keinen freien Raum zwischen sich lassen.

Die tiefliegenden Rahmenteile 62 bewirken insgesamt eine Erniedrigung des Schwerpunkts und ermöglichen eine günstige Fahrerplatzgestaltung, da der Fahrerplatz relativ niedrig, also nahe seinem Arbeitsfeld, liegt und über den Rahmenteil 62 einen sicheren und bequemen Zugang aufweist.

**Patentansprüche**

1. Arbeitsfahrzeug mit wenigstens zwei antreibbaren und lenkbaren Rädern (2,3), die über wenigstens teilweise im Felgenbereich vorgesehene, zum Lenken verschwenkbare Radstützen (11) gegenüberliegend an einem Achskörper (10) aufgehängt sind, wobei die Radstützen (11) von den Radfelgen (15) schräg nach innen zu den darüberliegenden Enden des Achskörpers (10) verlaufen und mit dem Achskörper (10) eine als Lenk- und Antriebsachse ausgebildete Portalachse bilden und wobei der Antrieb über ein auf einem Achsbolzen (40) des jeweiligen Rads sitzendes Abtriebszahnrad erfolgt, auf welches ein Ritzel (38, 44) treibt, das in der zugeordneten Radstütze (11) gelagert ist, gekennzeichnet durch die folgenden Merkmale:

a) das Ritzel (38; 44) ist im Sinne einer hohen Untersetzung wesentlich kleiner als das Abtriebszahnrad;

b) der jeweilige, den Querteil der Portalachse bildende Achskörper (10) ist oberhalb der Radfelgen (15) aber ganz oder teilweise unterhalb der Oberseite der Räder (2,3) angeordnet;

c) die Räder (2,3) besitzen einen Verschwenkbereich in der Größenordnung von 180 Winkelgraden, wobei, auf die jeweiligen Verschwenkungsendstellungen bezogen, die radialen Mittelebenen eines Rads (2,3) nach unten zu konvergieren und nach oben zu so weit divergieren, daß in dem verbleibenden Zwischenraum der jeweiligen Achskörper (10) Platz findet.

2. Arbeitsfahrzeug nach Anspruch 1, dadurch gekennzeichnet, daß die Verlängerung der Längsachsen (19) der Radstützen (11) jeweils durch die Bodenaufstandsfläche des betreffenden Rads (2, 3) verläuft.

3. Arbeitsfahrzeug nach Anspruch 1, dadurch gekennzeichnet, daß der Spreizungswinkel ($\alpha$) zwischen 10 und 16 Winkelgraden beträgt.

4. Arbeitsfahrzeug nach einem der Ansprüche 1 bis 3, dadurch gekennzeichnet, daß die Radstützen (11) jeweils schräg zu einer vertikalen, die Drehachse (37) des zugeordneten Rads (2, 3) enthaltenden Ebene angeordnet sind.

5. Arbeitsfahrzeug nach Anspruch 1, dadurch gekennzeichnet, daß die Räder (2, 3), bezogen auf ihre in der Geradeausfahrt eingenommene Mittenstellung, in beiden Schwenkrichtungen jeweils um etwa 90 Winkelgrade verschwenkbar sind.

6. Arbeitsfahrzeug nach Anspruch 1, dadurch gekennzeichnet, daß das Abtriebszahnrad als Stirnrad (39) ausgebildet ist, dessen antreibendes Ritzel (38) über eine im wesentlichen horizontale Ritzelwelle und über zwei Kegelradgetriebe (34, 36), zwischen denen eine in der Längsrichtung der

Radstütze (11) in dieser verlaufende Zwischenwelle (35) eingeschaltet ist, mit einer im Achskörper (10) gelagerten Achswelle (33) verbunden ist.

7. Arbeitsfahrzeug nach Anspruch 1, dadurch gekennzeichnet, daß das Abtriebszahnrad als Tellerrad (45) ausgebildet ist und ein Kegelradförmiges Ritzel (44) über eine Zwischenwelle (35) und ein Kegelradgetriebe (34) mit einer im Achskörper (10) gelagerten Achswelle (33) verbunden ist.

8. Arbeitsfahrzeug nach Anspruch 1, dadurch gekennzeichnet, daß die Achskörper (10) an den Unterseiten von Traversen (64) des Fahrzeugrahmens (1) sitzen und daß an den Achskörpern (10) jeweils ein Lenkhebel (26) gelagert ist, der für den Angriff eines Lenkantriebs einen oberhalb des Achskörpers (10) angeordneten Arm (27) aufweist und der noch einen unterhalb des Achskörpers (10) angeordneten Arm (28) besitzt, der über eine Winkelübersetzung (29) an der zugeordneten Radstütze (11) angreift.

## Claims

1. A travelling implement with at least two driven and steerable wheels (2,3) which are suspended opposite each other on axle member (10) over wheel legs (11) which are swivelable for steering and located at least partially in the wheel rim area, wherein the wheel legs (11) extend obliquely inwardly from the wheel rims (15) toward the ends of the axle member (10) located above the wheel rims (15) and form together with the axle member (10) a portal axle constructed as a steering and drive axle, and wherein the drive is effected through a driven gear mounted on a stub axle (40) of the respective wheel, the driven gear driving a pinion (38,44) which is mounted in the respective wheel leg (11), characterized by the following features,

a) the pinion (38;44) is substantially smaller than the driven gear in order to obtain a high stepdown ratio;

b) the respective axle member (10) forming the transverse portion of the portal axle is arranged above the wheel rims (15) and totally or partially below the top limits of the wheels (2,3);

c) the wheels (2,3) have a swivelling range in the order of magnitude of 180 degrees, wherein, in relation to the respective swivel end positions, the radial middle planes of a wheel (2,3) converge downwards and diverge upwards to such an extent that the clearance therebetween affords sufficient space for the respective axle member (10).

2. The travelling implement according to Claim 1, characterized in that the extension of longitudinal axes (19) of the wheel legs (11) extends through the contact surface of the respective wheel (2,3) with the ground.

3. The travelling implement according to Claim 1, characterized in that the inclination angle ($\alpha$) is between 10 and 16 degrees.

4. The travelling implement according to one of Claims 1 to 3, characterized in that the wheel legs (11) are arranged obliquely relative to a vertical plane containing the axes of rotation (37) of the respective wheel (2,3).

5. The travelling implement according to Claim 1, characterized in that the wheels (2,3) can be swivelled in both swivelling directions by approximately 90 degrees relative to the middle position assumed during straight-ahead travel.

6. The travelling implement according to Claim 1, characterized in that the driven gear is constructed as a spur gear (39) whose driving pinion (38) is connected to an axle shaft (33) mounted in the axle member (10) through an essentially horizontal pinion shaft and to bevel gear mechanisms (34,36) between which is mounted an intermediate shaft (35) extending in the longitudinal direction of the wheel leg (11).

7. The travelling implement according to Claim 1, characterized in that the driven gear is constructed as a ring gear (45), and that a conical pinion (44) is connected through an intermediate shaft (35) and a bevel gear mechanism (34) to an axle shaft (33) mounted in the axle member (10).

8. The travelling implement according to Claim 1, characterized in that the axle members (10) are mounted at the bottom sides of transverse members (34) of the vehicle frame 1, and that at each axle member (10) there is mounted a steering lever (26) which has an arm (27) arranged above the axle member (10) for engagement of a steering drive and which has another arm (28) arranged below the axle member (10) which arm acts through a linkage (29) on the respective wheel leg (11).

## Revendications

1. Véhicule de travail muni d'au moins deux roues (2, 3) pouvant être entrainîes et orientables oui sont suspendues à un corps d'essieu (10), de façon opposée, par l'intermédiaire de supports de roue (11) prévus au moins partiellement dans la région de jante, pouvant pivoter pour la direction, les supports de roue (11) se dirigeant obliquement des jantes de roue (15) vers l'intérieur et vers les extrémités du corps d'essieu (10) situées au-dessus et formant avec le corps d'essieu (10) un essieu en portioue conçu comme essieu de direction et d'entraînement et l'entraînement s'effectuant par l'intermédiaire d'une roue dentée menée montée sur un tourillon (40) de la roue considérée et sur laquelle agit un pignon (38, 44) oui est monté dans le support de roue adjoint (11), caractérisé par les particularités suivantes:

a) le pignon (38; 44) est notablement plus petit que la roue dentée menée, dans le sens d'une grande démultiplication;

b) le corps d'essieu respectif (10), formant la partie transversale de l'essieu en portique, est disposé au-dessus des jantes de roue (15), mais complètement ou partiellement en dessous du côté supérieur des roues (2, 3);

c) les roues (2, 3) présentent une marge de pivotement de l'ordre de grandeur de 180° et relativement aux positions extrémes respectives de pivotement les plans médians radiaux d'une roue (2, 3) convergent vers le bas et divergent vers le haut dans une mesure telle que le corps d'essieu respectif (10) trouve place dans l'espacement restant.

2. Véhicule de travail selon la revendication 1, caractérisé en ce que le prolongement des axes longitudinaux (19) des supports de roue (11) passe chaque fois par la surface d'appui au sol de la roue considérée (2, 3).

3. Véhicule de travail selon la revendication 1 caractérisé en ce que l'angle (α) est de 10 à 16°.

4. Véhicule de travail selon l'une des revendications 1 à 3, caractérisé en ce que les supports de roue (11) sont chaque fois disposés obliquement par rapport à un plan vertical contenant l'axe de rotation (37) de la roue adjointe (2, 3).

5. Véhicule de travail selon la revendication 1, caractérisé en ce que les roues (2, 3), relativement à leur position moyenne occupée dans la marche en ligne droite, peuvent pivoter d'environ 90° dans chacun des deux sens de pivotement.

6. Véhicule de travail selon la revendication 1, caractérisé en ce que la roue dentée menée est conçue sous forme de roue droite (39), dont le pignon d'entraînement (39) est relié, par l'intermédiaire d'un arbre de pignon pratiquement horizontal et par l'intermédiaire de deux trains de roues conques (34, 36) entre lesquels est interposé un arbre intermédiaire (35) passant dans le support de roue (11) dans la direction longitudinale de celui-ci, à un arbre d'essieu (33) monté dans le corps d'essieu (10).

7. Véhicule de travail selon la revendication 1, caractérisé en ce que la roue dentée menée est conçue sous forme de couronne (45), et en ce qu'un pignon en forme de roue conique (44) est relié, par l'intermédiaire d'un arbre intermédiaire (35) et d'un train de roues coniques (34), à un arbre d'essieu (33) monté dans le corps d'essieu (10).

8. Véhicule de travail selon la revendication 1, caractérisé en ce que les corps d'essieu (10) sont placés aux côtés inférieurs de traverses (64) du châssis (1) du véhicule, et en ce que sur chacun des corps d'essieu (10) est monté un levier de direction (26) qui présente pour l'application d'un entraînement de direction un bras (27) disposé au-dessus du corps d'essieu (10) et qui présente encore un bras (28) disposé en dessous du corps d'essieu (10), qui agit par l'intermédiaire d'une multiplication d'angle (29). sur le support de roue adjoint (11).

Fig. 1

Fig. 2

0 113 062

Fig. 3

2,3

10

2,3

11

12

21

Fig. 4

Fig. 5

Fig. 6

Fig. 7

Fig. 8

*Fig. 9*

Fig. 10

Fig. 11